# EUROPÄISCHE PATENTANMELDUNG

(11) **EP 0 744 570 A1**
(43) Veröffentlichungstag der Anmeldung: **27.11.1996**
(21) Anmeldenummer: 96106503.4
(22) Anmeldetag: 25.04.1996
(51) Int. Cl.: F16K 31/46, F16C 1/26, F16L 41/06

(54) **Absperrarmatur für eine unter Mediendruck stehende Rohrleitung**

(30) Priorität: 20.05.1995 DE 19518585
(71) Anmelder: MANIBS Spezialarmaturen GmbH & Co. KG, D-42859 Remscheid (DE)
(72) Erfinder: Schafstein, Jürgen, 42859 Remscheid (DE)
(74) Vertreter: Mentzel, Norbert, Dipl.-Phys.

(57) **Zusammenfassung**

Bei einer Absperrarmatur für eine unter Mediendruck stehende Rohrleitung (19) wird ein Gehäuse an der Rohrleitung befestigt, welche einen Hauptstutzen (11) und einen Nebenstutzen (12) besitzt. Der Hauptstutzen dient zur Axialbewegung eines Absperrglieds (20), welches die Mündungsöffnung des in den Hauptstutzen übergehenden Nebenstutzens bedarfsweise verschließt. Zur Axialbewegung des Absperrglieds dient eine teleskopartig ausfahrbare Spindel (31,32), die am Ende des Hauptstutzens herausragt und dort drehgelagert ist. Zur Drehbetätigung dieses Spindelendes dient eine Schlüsselstange (51), die bedarfsweise in einem Schutzrohr (52) geführt ist. Um eine geringe Bauhöhe zu erzielen, wird vorgeschlagen, zwischen dem Spindelende und der Schlüsselstange ein biegsames Wellenstück (41) anzuordnen und zwischen dem Hauptstutzen und dem Schutzrohr eine krümmbare Schutzhülle (45) zu schalten. Das Wellenstück mit der Schutzhülle bildet einen Adapter, der einen beliebigen Winkel zwischen der Längsachse der Schlüsselstange und der Rohrachse des Hauptstutzens überbrückt.

## Beschreibung

Die Erfindung richtet sich auf eine Absperrarmatur der im Oberbegriff des Anspruches 1 angegebenen Art. Diese Armatur kann zugleich als Anbohreinrichtung ausgebildet sein, wo das Absperrglied aus einem zylindrischen Schneidwerkzeug besteht, welches im Anbohrfall die am Innenende des Hauptstutzens befindliche, medienführende Rohrleitung anbohrt.

Bei dem bekannten Gerät dieser Art (DE 43 04 954 A1) liegt eine verhältnismäßig hohe Bauhöhe vor, denn der das Absperrglied aufnehmende Hauptstutzen muß sich vertikal erstrecken, damit das herausragende Spindelende zur Drehbetätigung des Absperrglieds mit der stets vertikal zu setzenden Schlüsselstange gekuppelt werden kann. Deswegen muß die Rohrleitung ausreichend tief im Erdreich verlegt werden, so daß sich eine ausreichend große Erdabdeckung oberhalb der Rohrleitung ergibt.

Der Erfindung liegt die Aufgabe zugrunde, eine Absperrarmatur der im Oberbegriff des Anspruches 1 genannten Art zu entwickeln, die trotz ihrer Drehbetätigung über eine Schlüsselstange bereits mit einer geringen Erdabdeckung über der Rohrleitung auskommt, an welcher die Absperrarmatur sitzt. Dies wird erfindungsgemäß durch die im Kennzeichen des Anspruches 1 angeführten Maßnahmen erreicht, denen folgende besondere Bedeutung zukommt.

Bei der Erfindung ist es nicht mehr erforderlich, den Hauptstutzen vom Gehäuse der Absperrarmatur vertikal zu positionieren, um die Spindel zur Drehbetätigung des Absperrglieds mit der Schlüsselstange verbinden zu können. Bei der Erfindung kann das Gehäuse grundsätzlich in beliebiger Neigungslage an der Rohrleitung befestigt werden und, beispielsweise, mit seinem das Absperrglied aufweisenden Hauptstutzen horizontal neben der Rohrleitung angeordnet sein. Bei der Erfindung wird nämlich zwischen dem aus dem Hauptstutzen herausragenden Spindelende einerseits und der Angriffsstelle der Schlüsselstange ein besonderer Adapter gesetzt, welcher die gegebene Winkellage des Hauptstutzens gegenüber der gewünschten Position der Schlüsselstange überbrückt. Die Schlüsselstange kann dann zwar, wie gewohnt, in ein Schutzrohr eingeführt werden, kommt aber nicht unmittelbar mit dem Spindelende in Verbindung, sondern mittelbar, über das zum erfindungsgemäßen Adapter gehörende biegsame Wellenstück. Durch ihre Biegsamkeit läßt sich nämlich das Wellenstück entsprechend dem gegebenen Winkel zwischen dem Hauptstutzen und der Schlüsselstange so mit ihrem äußeren Kupplungsende positionieren, daß es mit der vertikalen Schlüsselstange bequem in Eingriff kommt. Der Adapter kann auch eine in sich krümmbare Schutzhülle umfassen, welche das biegsame Wellenstück umhüllt und zwischen dem Hauptstutzen des Gehäuses einerseits und dem Schutzrohr für die Schlüsselstange andererseits verläuft und dort ihrerseits kuppelbar ist.

Zweckmäßigerweise bildet man den Adapter als eine vormontierte Baueinheit aus dem Wellenstück und der Schutzhülle aus, die beidendig Kupplungen sowohl für die Schlüsselstange als auch das Spindelende sowie für das Schutzrohr einerseits und den Hauptstutzen andererseits besitzt.

Sehr vorteilhaft ist es dabei, ein V-förmiges Gehäuse zu verwenden, das in den Ansprüchen 7 bis 10 angeführt ist. Diesen Maßnahmen kommt aber eine eigenständige erfinderische Bedeutung zu. Ein solches V-förmiges Gehäuse kann auch bei Absperrarmaturen oder bei Anbohreinrichtungen verwendet werden, die nicht über einen Adapter gemäß Anspruch 1 betätigt werden.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: einen Axialschnitt durch die an eine Rohrleitung befestigte Absperrarmatur mit einem auch im Längsschnitt gezeichneten Adapter nach der Erfindung, wobei aber der Adapter in die Zeichenebene hineingedreht dargestellt ist, während er in Wirklichkeit senkrecht zur Zeichenebene verläuft,
- Fig. 2: ein Bruchstück der Absperrarmatur von Fig. 1,
- Fig. 3: in Vergrößerung den mit III bezeichneten Bereich von Fig. 2,
- Fig. 4: in Vergrößerung den mit Ziff. IV bezeichneten Bereich von Fig. 2, und
- Fig. 5: einen Querschnitt durch die in Fig. 4 gezeigten Bauteile längs der dortigen Schnittlinie V-V.

An einer unter Mediendruck stehenden Rohrleitung 19 ist, über nicht näher gezeigte Schellen, das Gehäuse 10 einer Absperrarmatur befestigt, deren wesentlicher Teil ein hier als zylindrisches Schneidwerkzeug 20 ausgebildetes Absperrglied ist. Das Gehäuse besteht aus zwei jeweils rohrförmig gestalteten Stutzen 11, 12, nämlich einem Hauptstutzen 11 und einem Nebenstutzen 12. Die Achsen 13, 14 dieser beiden Stutzen 11, 12 könnten zwar zueinander rechtwinklig liegen, doch nehmen diese im vorliegenden Fall einen spitzen Winkel 15 von ca. 45^{o} zueinander ein. Es liegt also ein V-förmiges Gehäuse 10 vor. Die beiden Achsen 13, 14 schneiden sich in dem mit 17 bezeichneten Punkt, der nahe an einer mittels des Schneidwerkzeugs 20 zu bohrenden Rohröffnung 16 der Leitung 19 liegt. Dieser Schnittpunkt 17 liegt im Bereich eines zum Gehäuse 10 gehörenden Sattels 18, der eine Heizwendel aufweist und durch diese eine Schweißverbindung zwischen dem Kunststoffmaterial des Gehäuses 10 und der Leitung 19 erzeugt. Das Gehäuse 10 und die Rohrleitung 19 bestehen nämlich wenigstens bereichsweise aus schweißfähigem Kunststoffmaterial.

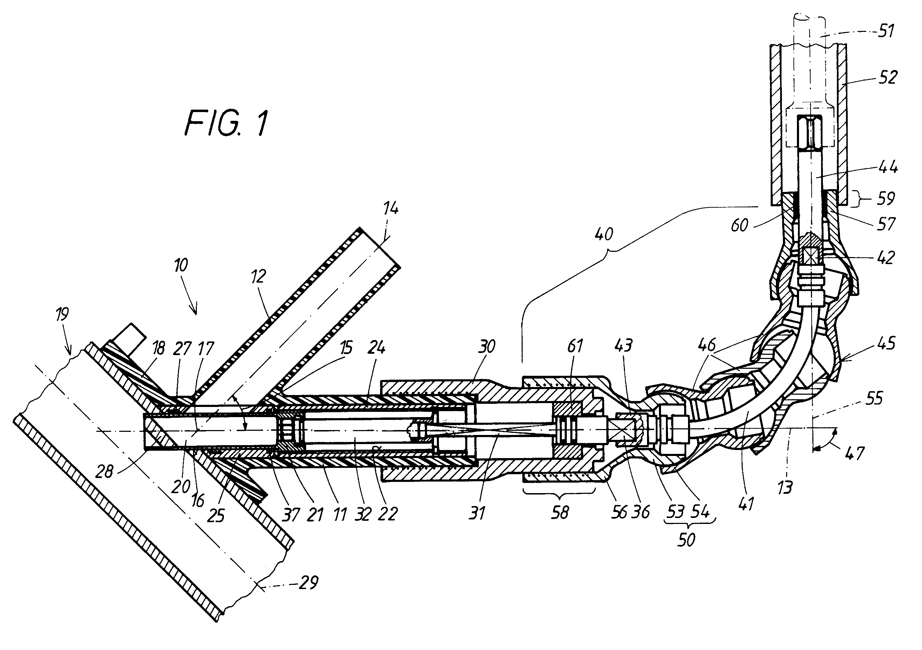

Die beiden Stutzenachsen 13, 14 des V-Gehäuses 10 liegen in einer gemeinsamen Axialebene bezüglich der in Fig. 1 ebenfalls strichpunktiert angedeuteten Längsachse 29 der Rohrleitung 19, welche die Zeichenebene von Fig. 1 ist. Damit sind, nach der Befestigung des Gehäuses 10, die beiden Stutzen 11, 12 im wesentlichen höhengleich neben der anzubohrenden Rohrleitung 19 angeordnet. Der das Schneidwerkzeug 20 aufnehmende Hauptstutzen 11 ist, ausweislich seiner Achse 13, geneigt zur Rohr-Längsachse 29 angeordnet, während der Nebenstutzen 12 senkrecht zu dieser Rohr-Längsachse 29 verläuft. Trotz des an der Rohrleitung 19 befestigten Gehäuses 10 ergibt sich in vertikaler Richtung, also senkrecht zur Zeichenebene von Fig. 1, nur eine kleine Bauhöhe, welche der Wandstärke des Sattels 18 und/oder einer nicht näher gezeigten Befestigungsschelle entspricht. Es genügt, die Rohrleitung 19 nur mit einer aus Sicherheitsvorschriften sich ergebenden Erdabdeckung zu versehen. Die Bauhöhe des V-Gehäuses ist daher für die Verlegungstiefe der Rohrleitung 19 völlig unmaßgeblich. Daher kann die Rohrleitung 19 mit einem verhältnismäßig geringen Bodenaushub bequem im Erdreich verlegt werden.

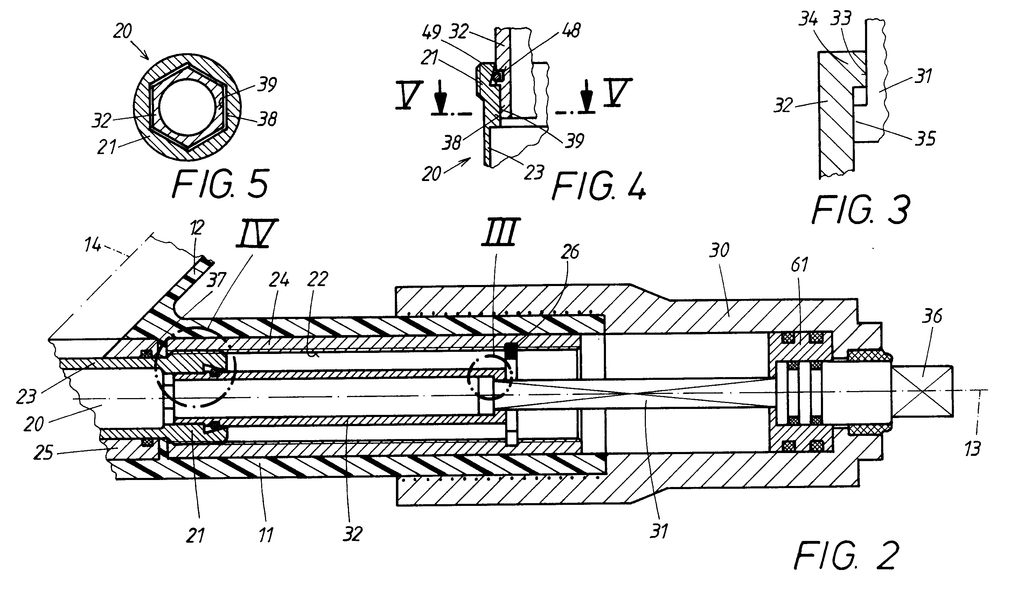

Ausweislich der Fig. 2 ist der Hauptstutzen 11 mit einem Innengewinde 22 versehen, in welchem das Schneidwerkzeug 20 über ein mit einem entsprechenden Außengewinde versehenen Kopfstück 21 verschraubbar ist. Am Kopfstück 21 schließt sich ein Schaftstück 23 mit zylindrischer Umfangsfläche an. Bei Drehung des Schneidwerkzeugs 20 kommt es zu einer Verschraubung und es wird aus der Rohrwand der anzubohrenden Rohröffnung 16 ein Kernstück 28 herausgeschnitten, welches die zylindrische Öffnung im Inneren des Schneidwerkzeugs 20 mediendicht abschließt. Das Innengewinde 22 könnte zwar an der Innenfläche des Hauptstutzens 11 unmittelbar eingearbeitet sein, doch verwendet man im vorliegenden Fall eine Gewindehülse 24, die aus formsteifem Material, wie Metall, insbesondere Messing gefertigt ist. Unterhalb des Innengewindes 22 ist im Hauptstutzen 11 eine Stützbuchse 25 angeordnet, deren lichte Buchsenweite dem Durchmesser des Schaftstücks 23 vom Schneidwerkzeug 20 angepaßt ist und daher zu dessen Gleitführung dient. Bereits in der Ausgangsposition, wo das Schneidwerkzeug 20 mit seinem Kopfstück 21 in der Nähe eines Sprengrings 26 angeordnet ist, ragt das Ende des Schaftstücks 23 in die Stützbuchse 25 hinein und wird dort während der weiteren Verschraubung exakt geführt. Auch in der ausgefahrenen Position gemäß Fig. 1 und 2 bleibt die Gleitführung zwischen dem Schaftstück 23 und der Stützbuchse 25 bestehen.

Im Bereich der anzubohrenden Rohröffnung 25 besitzt, wie Fig. 1 zeigt, die Stützbuchse 25 in einer Ringaufnahme einen ersten Dichtring 27. An seinem gegenüberliegenden Ende besitzt, wie aus Fig. 2 zu entnehmen ist, die Stützbuchse 25 eine weitere Ringnut, in welcher sich ein zweiter Dichtring 37 befindet, der ebenfalls mit der zylindrischen Umfangsfläche des Schaftstücks 23 mediendicht zusammenwirkt. In dem Abschnitt zwischen den beiden Dichtungen 27, 37 liegt die Mündungsöffnung des Nebenstutzens 12. In der dargestellten Position des Schneidwerkzeugs 20 von Fig. 1 und 2 ist diese Mündungsöffnung durch das Schneidwerkzeug 20 geschlossen, wodurch dieses wie ein Absperrglied die Mündungsöffnung des Nebenstutzens 12 ventilartig verschließt. Beim Hochschrauben des Schneidwerkzeugs 20 in die andere, in der Nähe des Sprengrings 26 liegende Position mit seinem Kopfstück 21, ist der Nebenstutzen 12 für einen Medienfluß geöffnet.Dann liegt die Offenstellung des Absperrglieds vor. Das ausströmende Medium wird vom Nebenstutzen 12 in einen daran angeschlossenen, nicht näher gezeigten Abzweig weitergeleitet.

Ausweislich der Fig. 2 ist an den Hauptstutzen 11 eine hier aus Kunststoff bestehende Kappe 30 mediendicht befestigt, wofür im vorliegenden Fall ebenfalls eine durch Heizleiter erzeugte Schweißverbindung dienlich ist. Zur Verschraubung des Schneidwerkzeugs 20 dient eine teleskopartig ausfahrbare Spindel 31, 32, die im vorliegenden Fall aus einem massiven Spindelschaft 31 und einer Spindelbuchse 32 besteht. Die Drehmomentübertragung zwischen den beiden Spindelteilen 31, 32 erfolgt durch eine unrunde Flächenberührung in den aus Fig. 3 erkennbaren komplementären Querschnitten, die im vorliegenden Fall als Vierkant-Profile ausgebildet sind. Die Unverlierbarkeit der beiden längsverschieblichen Spindelteile 31, 32 läßt sich durch Endanschläge erreichen, die z. B. durch einen Außenbund 35 am Spindelschaft 31 und einen Innenbund 34 an der Spindelbuchse 32 erzeugt sind. Der Spindelschaft 31 ist in der Kappe 30 in einem Lagerring 61 drehgelagert, und dort durch innere und äußere, zweckmäßigerweise doppelte Ringdichtungen mediendicht gesichert. Der Spindelschaft 31 ragt, unter Verwendung weiterer Dichtungsmittel im Umfangsbereich, aus der Kappe 30 heraus. Das Spindelende 36 besitzt einen unrunden Umriß, der zu seiner Drehbetätigung mit einem besonderen Adapter 40 kuppelbar ist, wie Fig. 1 zeigt.

Wie aus Fig. 5 näher erkennbar ist, ist das Kopfstück 21 zur Übertragung eines Drehmoments mit einer unrunden Aufnahme, nämlich Sechskant-Aufnahme 38 versehen, während das Innenende der Spindelbuchse 32 ein dazu entsprechendes, komplementäres Steckprofil 39 besitzt. Außerdem steht das Kopfstück 21 des Schneidwerkzeugs 20 mit der Spindelbuchse 32 im Schnappeingriff, weshalb die Aufnahme 38 im Kopfstück 21 eine hinterschnittene Radialausnehmung 48 und die Spindelbuchse 32 in einer Umfangsnut einen Federring 49 besitzen.

Der Adapter 40 dient dazu, um das zur Drehung des Schneidwerkzeugs 20 dienende Spindelende 36 mit einer Schlüsselstange 51 kuppeln zu können, welche, entgegen der Darstellung in Fig. 1, vertikal zur Zeichenebene verläuft. Wie bereits oben erwähnt wurde, ist in Fig. 1 der Adapter 40 zusammen mit der strichpunktiert angedeuteten Schlüsselstange 51 üblicherweise in einer Vertikalebene bezüglich der Zeichenebene von Fig. 1 angeordnet. In der Zeichenebene liegen dagegen die Rohrachse 29 als auch die beiden Stutzenachsen 13, 14. Die Schlüsselstange 51 kann durch ein Schutzrohr 52 eingesteckt werden, welches, durch das Erdreich hindurch, bis zur Oberfläche reicht und zweckmäßigerweise vertikal verläuft. Es versteht sich, daß die Schlüsselstange 51 und ggf. das Schutzrohr 52 auch in einem beliebigen, von der Vertikalposition abweichenden Winkel verlaufen könnten.

Der Adapter 40 umfaßt zunächst ein biegsames Wellenstück 41, das beidendig geeignete Kupplungsteile 43, 44 besitzt, die einerends zum Anschluß des Spindelendes 36 und anderends zum Aufstecken der Schlüsselstange 51 dienen. Der spindelseitige Kupplungsteil 43 besteht dabei aus einer Kupplungsaufnahme 43, während der Kupplungsteil 44 aus Kupplungsbolzen 44 gebildet ist, der an seinem Ende einen dem unrunden Matrizen-Querschnitt der Schlüsselstange 51 angepaßten, komplementären Patrizen-Steckteil besitzt.

Das Wellenstück mit diesen Kupplungsteilen 43, 44 bildet den Kernteil des Adapters 40, der baueinheitlich mit einer Schutzhülle 45 ausgebildet ist. Die Schutzhülle 45 besteht aus mehreren, ineinandergeschachtelten Hülsenabschnitten 46, die untereinander, bei 50, gelenkig verbunden sind. Diese Gelenkverbindung 50 wird von ineinandergesteckten, zueinander komplementären Kugelsegmenten 53, 54 gebildet, die eine freie Abwinkelung der Achsen der beiden ineinandergreifenden Hülsenabschnitte 46 gestatten. Zwischen den ineinandergreifenden Kugelsegmenten 53, 54 besteht eine gewisse Reibung, welche die gewählte Krümmungsform der Schutzhülle 45 fixiert. Durch diese Fixierung ist auch die Biegung des darin integrierten Wellenstücks 41 festgelegt.

Damit ist es möglich, einen beliebigen Winkel 47 zwischen der in Fig. 1 ebenfalls strichpunktierten Längsachse 55 der zu kuppelnden Schlüsselstange 51 einerseits und der Achse 13 zur beschriebenen Längsbewegung des Schneidwerkzeugs 20 andererseits zu überbrücken. Dabei sind die zur Schutzhülle 45 gehörenden Endabschnitte 56, 57 in ihren Endbereichen ebenfalls mit komplementären Kupplungsteilen 58, 59 für die angrenzenden Elemente versehen. Der am inneren Endabschnitt 56 der Schutzhülle 45 befindliche Kupplungsteil 58 ist nach Art einer Muffe gestaltet, in die eine durch elektrischen Strom erwärmbare Heizwendel integriert ist. Dieser innere Muffen-Kupplungsteil 58 wird auf das Endstück der am Hauptstutzen 11 sitzenden Kappe 30 aufgeschoben und dort in seiner Aufstecklage festgeschweißt. Mindestens dieser Endabschnitt 56, zweckmäßigerweise aber sämtliche Hülsenabschnitte 46 der Schutzhülle 45, sind aus geeignetem, schweißfähigem Kunststoff ausgebildet. Bedarfsweise könnte eine Verschweißung oder Verklebung auch im Bereich der beschriebenen Gelenkverbindungen 50 erfolgen, wodurch die gewünschte Krümmungslage des Adapters fixiert ist.

Der gegenüberliegende äußere Endabschnitt 57 dient zunächst, ggf. unter Zwischenschaltung einer Lagerhülse 60, zur Drehlagerung des vorbeschriebenen Kupplungsbolzens 44. Wie aus Fig. 1 erkennbar, kann dieser Kupplungsbolzen 44 seinerseits über eine Steckkupplung 42 drehfest mit dem biegsamen Längenabschnitt des Wellenstücks 41 gekuppelt sein. Das äußere Stück des Endabschnitts 57 wird ebenfalls kuppelnd mit dem Schutzrohr 52 für die Schlüsselstange 51 verbunden und besteht im vorliegenden Fall aus einem hohlen Steckschaft 59, der im Kupplungsfall ins Innere des Schutzrohres 52 eingreift. Nach der Montage verläuft das die Schlüsselstange 51 aufnehmende Schutzrohr 52 in seitlichem Abstand, z. B. vertikal nach oben, bezüglich der, wie bereits erwähnt wurde, in der Regel horizontal verlaufenden, anzubohrenden Rohrleitung 19.

### Bezugszeichenliste:

- 10: V-Gehäuse
- 11: Hauptstutzen von 10
- 12: Nebenstutzen von 10
- 13: Achse von 11
- 14: Achse von 12
- 15: spitzer Winkel zwischen 13, 14
- 16: anbohrbare Rohröffnung von 19
- 17: Schnittpunkt von 13, 14
- 18: Sattel von 10
- 19: Rohrleitung
- 20: Absperrglied, Schneidwerkzeug
- 21: Kopfstück von 20
- 22: Innengewinde in 11
- 23: Schaftstück von 20
- 24: Gewindehülse für 22
- 25: Stützbuchse in 11
- 26: Sprengring in 24
- 27: erster Dichtring in 25
- 28: Kernstück in 20
- 29: Längsachse
- 30: Kappe an 11
- 31: erstes Spindelglied, Spindelschaft
- 32: zweites Spindelglied, Spindelbuchse
- 33: drehmomentübertragende Flächenberührung zwischen 31, 32
- 34: Innenbund an 32
- 35: Außenbund an 31
- 36: kuppelbares Spindelende an 30
- 37: zweiter Dichtring von 30
- 38: Sechskantaufnahme in 21
- 39: Sechskantsteckprofil an 32
- 40: Adapter, Baueinheit
- 41: biegsames Wellenstück
- 42: Innenkupplung zwischen 41 und 44
- 43: erster Kupplungsteil von 41, Kupplungsaufnahme
- 44: zweiter Kupplungsteil von 41, Kupplungsbolzen
- 45: Schutzhülle von 40
- 46: Hülsenabschnitt von 45
- 47: Winkel zwischen 13, 55
- 48: Radialausnehmung in 38
- 49: Federring bei 39
- 50: Gelenkverbindung zwischen 46
- 51: Schlüsselstange
- 52: Schutzrohr für 51
- 53: inneres Kuppelsegment
- 54: äußeres Kuppelsegment
- 55: Längsachse von 51 bzw. 52
- 56: innerer Endabschnitt von 45
- 57: äußerer Endabschnitt von 45
- 58: innerer Kupplungsteil an 45, Muffe
- 59: äußerer Kupplungsteil an 45, Steckschaft
- 60: Lagerhülse für 44 in 57
- 61: Drehlager für 31 in 30

## Patentansprüche

1. Absperrarmatur für eine unter Mediendruck stehende Rohrleitung (19),
mit einem an der Rohrleitung sitzenden Gehäuse (10), welches zwei rohrförmige Stutzen (11, 12) aufweist,
nämlich einerseits einen Hauptstutzen (11), der zwar zur Rohrleitung (19) hin eine Rohröffnung (16) aufweist, aber die Rohröffnung (16) von einem im Stutzen axialbeweglichen Absperrglied (20) bedarfsweise verschließbar ist,
und andererseits einem Nebenstutzen (12), der - in Offenstellung des Absperrglieds (20) - das Medium aus der Rohrleitung (19) in einen an den Nebenstutzen (12) angeschlossenen Abzweig weiterleitet,
mit einer teleskopartig ausfahrbaren Spindel (31, 32) am Absperrglied (20), die drehgelagert (61) ist und deren Ende (36) aus dem Hauptstutzen (11) herausragt,
mit einer zur Drehbetätigung des Spindelendes (36) dienenden Schlüsselstange (51) und mit einem diese umgebenden Schutzrohr (52),
**dadurch gekennzeichnet**,
daß zwischen dem Spindelende (36) und der Schlüsselstange (51) ein biegsames Wellenstück (41) angeordnet ist und das Spindelende (36) gegenüber einer durch die Achse (29) der Rohrleitung (19) gelegten Vertikalebene abgewinkelt verläuft,
daß zwischen dem Hauptstutzen (11, 30) und dem Schutzrohr (52) eine krümmbare Schutzhülle (45) geschaltet ist, bestehend aus in sich steifen Hülsenabschnitten (46), die untereinander gelenkig (50) verbunden sind,
und daß das Wellenstück (41) und die Schutzhülle (45) einen Adapter (40) bilden, der den Winkel (47) zwischen der Längsachse (55) der Schlüsselstange (51) bzw. dem Schutzrohr (52) einerseits und der Achse (13) des Spindelendes (36) bzw. des Hauptstutzens (11, 30) andererseits überbrückt.

2. Absperrarmatur nach Anspruch 1, dadurch gekennzeichnet, daß die gelenkige Verbindung (50) der Hülsenabschnitte (46) aus komplementären, ineinandergesteckten Kugelsegmenten (53, 54) besteht, die an den Enden der Hülsenabschnitte (46) angeformt sind.

3. Absperrarmatur nach Anspruch 1 oder 2, dadurch gekennzeichnet, daß das Wellenstück (41) mit der Schutzhülle (45) eine kombinierte, vormontierte Baueinheit (40) bildet, die am einen Ende Kupplungen (44, 59) für die Schlüsselstange (51) bzw. das Schutzrohr (52) und am anderen Ende Kupplungen (43, 58) für das Spindelende (36) bzw. den Hauptstutzen (11, 30) aufweist.

4. Absperrarmatur nach Anspruch 3, dadurch gekennzeichnet, daß die Kupplungen (44, 59; 43, 58) der Baueinheit (40) aus Steckkupplungen bestehen.

5. Absperrarmatur nach einem oder mehreren der Ansprüche 1 bis 4, dadurch gekennzeichnet, daß die Hülsenabschnitte (46) der Schutzhülle (45) zwar frei abwinkelbar, aber in der gewünschten Winkelform fixierbar sind und die verwinkelte Schutzhülle (45) die Biegung des Wellenstücks (41) in ihrem Inneren festlegt.

6. Absperrarmatur nach einem oder mehreren der Ansprüche 1 bis 5, dadurch gekennzeichnet, daß die Absperrarmatur als Anbohreinrichtung ausgebildet ist,
wo das Absperrglied aus einem zylindrischen Schneidwerkzeug (20) besteht und - im Anbohrfall - am Innenende des Hauptstutzens (11) die Rohröffnung (16) in die Rohrleitung (19) bohrt,
und daß das Schneidwerkzeug (20) über die Spindel (31, 32) und den Adapter (40) in einem Innengewinde (22) des Hauptstutzens (11) axial verschraubbar ist und in seiner Ausschraublage eine vor dem Abgang des Nebenstutzens (12) angeordnete Dichtungsstelle (27) mediendicht absperrt.

7. Absperrarmatur, insbesondere nach einem oder mehreren der Ansprüche 1 bis 6, **gekennzeichnet** durch ein V-förmiges Gehäuse (10), wo die Achse (13) des Hauptstutzens (11) in einem spitzen Winkel (15) zur Achse (14) des Nebenstutzens verläuft,
beide Stutzenachsen (13, 14) in einer gemeinsamen, durch die Rohrachse (29) gelegten Axialebene angeordnet sind.

8. Absperrarmatur nach Anspruch 7, dadurch gekennzeichnet, daß - bei befestigtem V-Gehäuse (10) - die Axialebene mit den beiden Stutzenachsen (13, 14) im wesentlichen horizontal verläuft und sowohl der Haupt- als auch der Nebenstutzen (11, 12) im wesentlichen höhengleich neben der anzubohrenden Rohrleitung (19) liegen.

9. Absperrarmatur nach Anspruch 7 oder 8, dadurch gekennzeichnet, daß die Achse (14) des Nebenstutzens (12) im wesentlichen senkrecht, aber die Achse (13) des Hauptstutzens (11) geneigt zur Längsachse (29) der anzubohrenden Rohrleitung (19) verlaufen.

10. Absperrarmatur nach einem oder mehreren der Ansprüche 7 bis 9, dadurch gekennzeichnet, daß die Achsen (13, 14) des Haupt- und Nebenstutzens (11, 12) sich am Innenende des Gehäuses (10), vorzugsweise im Bereich eines zur Gehäuse-Befestigung dienenden Sattels (18), in der Rohrleitung (19) schneiden.
